# EUROPÄISCHE PATENTSCHRIFT

(11) **EP 1 423 038 B1**
(45) Veröffentlichungstag und Bekanntmachung des Hinweises auf die Patenterteilung: **21.11.2007**
(21) Anmeldenummer: 02797616.6
(22) Anmeldetag: 23.08.2002
(51) Int. Cl.: A47J 19/02, F16B 21/18

(54) **KÜCHENGERÄT**
KITCHEN DEVICE
APPAREIL DE CUISINE

(30) Priorität: 30.08.2001 DE 10142501
(43) Veröffentlichungstag der Anmeldung: 02.06.2004
(73) Patentinhaber: BSH Bosch und Siemens Hausgeräte GmbH, 81739 München (DE)
(72) Erfinder: AREH, Marko, 2360 Radlje ob Dravi (SI); BREZOVNIK, Peter, 3330 Mozirje (SI); PAVLOVIC, Henrik, 3333 Ljubno ob Savin (SI); STEFFL, Michael, 83250 Marquartstein (DE); ZIBRET, Igor, 3327 Smartno ob Paki (SI)
(86) Internationale Anmeldenummer: PCT/EP2002/009464
(87) Internationale Veröffentlichungsnummer: WO 2003/020093

(56) Entgegenhaltungen:
- DE-B- 1 248 247
- GB-A- 960 827
- US-A- 2 822 198

## Beschreibung

Die Erfindung betrifft ein motorisches Küchengerät, insbesondere eine Fruchtpresse nach dem Oberbegriff des Anspruchs 1. Gattungsgemäße Fruchtpressen, mit einem sich drehenden Element, insbesondere einem aus einem Auffangbehältnis herausragenden, zum Auspressen einer Hälfte einer safthaltigen Frucht vorgesehenen Element, das über eine Antriebswelle angetrieben ist, die in einem Gehäuseteil gelagert ist, sind beispielsweise aus der GB 960 827 A bekannt.

Aus der EP 0 362 058 B1 ist eine durch einen Elektromotor angetriebene Fruchtpresse bekannt. Auffangbehältnis und Auffangschale werden von einem Gehäuse aufgenommen. Durch die Mitte der Auffangschale ragt eine Antriebswelle hindurch, die das herausragende Element und mit diesem das Auffangbehältnis in Drehbewegung versetzt. Die Antriebswelle wird über Riemenscheiben und einen Zahnriemen von einem Elektromotor angetrieben.

Schließlich sei nach auf die US 2,822,198 A hingewiesen.

Es ist die Aufgabe der Erfindung, ein motorisches Küchengerät so zu verbessern, dass es sich auf einfache Weise zusammenbauen lässt.

Erfindungsgemäß wird diese Aufgabe bei einem Küchengerät der eingangs genannten Art durch die Merkmale des kennzeichnenden Teils von Anspruch 1 gelöst.

Der Klemmring stellt eine axiale Sicherung dar. Wenn die Antriebswelle gegen die Kraft einer Druckfeder in Richtung ihrer Längsachse verschiebbar ist, was beispielsweise bei einer Fruchtpresse der Fall ist, bei das die auszupressende Frucht aufnehmende Element, das im wesentlichen die Form eines Rotationsparaboloids hat, durch eine oben aufgelegte Frucht nach unten gedrückt wird, wird ein elektrischer Schaltkreis geschlossen, in dem der elektrische Antriebsmotor liegt. Daher ist es notwendig, dass die Antriebswelle über einen gewissen Bereich in Längsrichtung beweglich ist. Dies erfordert den Einsatz einer Sicherheits-Klemmvorrichtung, die den Hub der Antriebswelle in Längsrichtung begrenzt.

Gemäß dem Stand der Technik werden hierfür Seeger-Ringe eingesetzt. Im Unterschied zu den bekannten Seeger-Ringen dreht sich die erfindungsgemäße Klemmvorrichtung nicht mit und verursacht daher auch keine Reibung an Gehäuseteilen. Insbesondere Kunststoff-Gehäuseteile könnte durch die Reibung abgeschliffen werden. Die Klemmvorrichtung hat gleichzeitig die Funktion einer axialen Lagerung. Eine Unterlegscheibe entfällt.

Ein besonderer Vorteil der Erfindung besteht darin, dass sich die Klemmvorrichtung leicht montieren und demontieren lässt. Montage und Demontage sind von Hand ohne den Einsatz eines Werkzeugs möglich.

Vorteilhafte Weiterbildungen der Erfindung ergeben sich aus den Unteransprüchen und aus der Beschreibung.

Geeignet ist ein Küchengerät, bei dem der Klemmring in einer Sicke in der Antriebswelle elastisch gehalten ist.

In einer bevorzugten Variante des Küchengeräts ist der Draht durch zwei Schenkel des Klemmrings gebildet, zwischen denen ein Gehäuseteil eingreift.

Besonders geeignet ist ein Küchengerät, bei dem das Gehäuseteil unterhalb eines ein Getriebe aufnehmenden Gehäuseteils angeordnet ist.

Nachstehend wird die Erfindung in einem Ausführungsbeispiel anhand der Figuren näher erläutert. Es zeigen:
- Fig. 1:: einen Ausschnitt aus einem Gehäuse einer Fruchtpresse im Längsschnitt mit einem Klemmring und
- Fig. 2:: den Klemmring gemäß Fig. 1 in der Draufsicht.

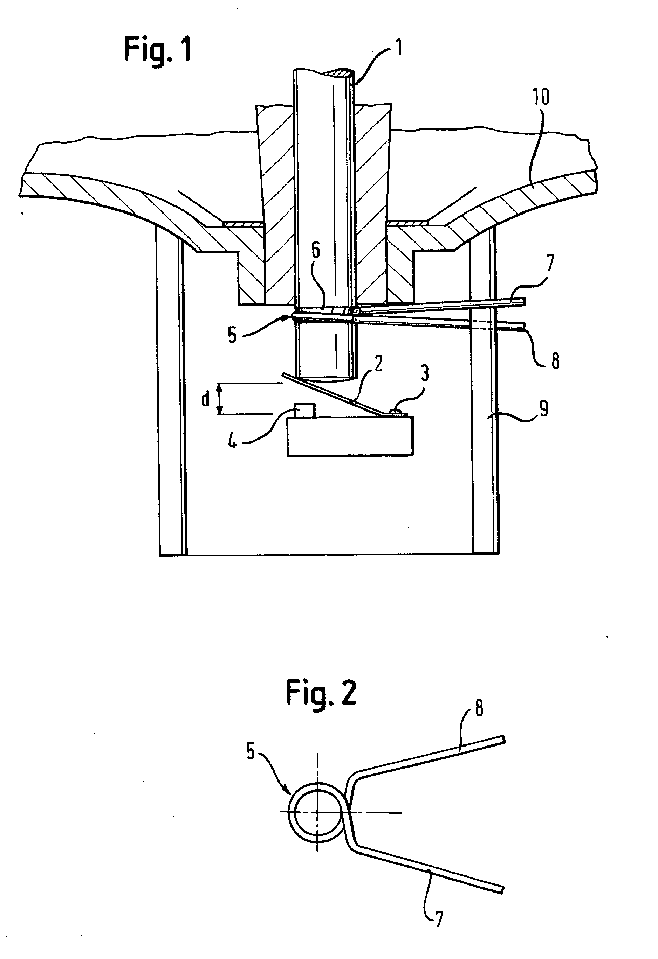

Eine Fruchtpresse (Fig. 1, 2) weist eine Antriebswelle 1 auf, die dazu dient, ein zum Auspressen einer Zitrusfrucht vorgesehenes Element in Drehbewegung zu versetzen. Die Antriebswelle 1 wird über einen Elektromotor angetrieben, der über eine Abtriebswelle und miteinander kämmende Zahnräder mit der Antriebswelle 1 in Verbindung steht. Die Antriebswelle 1 ist beispielsweise über hier nicht dargestellte Gleitlager gelagert und in axialer Richtung gegen die Federkraft einer Druckfeder 2 beweglich, die als einseitig an einem Befestigungspunkt 3 befestigte Blattfeder ausgebildet ist und mittels der die Antriebswelle 1 gegen eine Taste 4 zum Schließen eines den Elektromotor umfassenden elektrischen Schaltkreises in axialer Richtung um eine Distanz d verschiebbar ist.

Zur Sicherung gegen ein Herausziehen der Antriebswelle 1 nach oben ist ein Klemmring 5 vorgesehen, der in eine Sicke 6 auf der Antriebswelle 1 geklemmt ist.

Der Klemmring 5 hat zwei Schenkel 7, 8, über die er sich leicht von Hand fassen lässt, um ihn in die Sicke 6 einzubringen oder aus ihr herauszuziehen. Die Schenkel 7 und 8 sind um einen spitzen Winkel, beispielsweise von ca. 30°, von einander abgebogen.

Zwischen den Schenkeln 7 und 8 ist ein Gehäuseteil eingeklemmt, das hier durch eine sich im wesentlichen parallel zur Längsachse der Antriebswelle 1 erstreckende Stange 9 gebildet ist. Durch diese Sicherung ist einerseits gewährleistet, dass die Antriebswelle 1 nicht aus ihrem Sitz nach oben herausgezogen werden kann und andererseits, dass kein Gehäuseteil aus Kunststoff durch Reibung mit einem Sicherungsring bei der Rotation der Antriebswelle 1 abgeschliffen und dadurch beschädigt wird, weil der Klemmring 5 durch die Halterung mit der Stange 9 ortsfest ist.

Durch die Erfindung wird eine Antriebswelle 1 für ein elektrisches Küchengerät geschaffen, die gegen Herausziehen gesichert ist. Hierzu weist sie einen Klemmring 5 auf, der in einer Sicke 6 auf der Antriebswelle 1 gelagert ist. Dieser ist gegen Verdrehen durch ein Gehäuseteil, d. h. eine Stange 9, gesichert. Dieser ist über zwei Schenkel 7, 8 gegen Verdrehen durch ein Gehäuseteil, d. h. eine Stange 9, gesichert, die zwischen den Schenkeln 7, 8 eingreift. Die Stange 9 ist mit einem im wesentlichen waagrecht um die Antriebswelle 1 angeordneten Bodenstück 10 des Gehäuses verbunden.

## Patentansprüche

1. Motorisches Küchengerät, insbesondere Fruchtpresse (1), mit einem sich drehenden Element, insbesondere einem aus einem Auffangbehältnis herausragenden, zum Auspressen einer Hälfte einer safthaltigen Frucht vorgesehenen Element, das über eine Antriebswelle (1) angetrieben ist, die in einem Gehäuseteil gelagert und mittels eines Klemmrings (5) gegen Herausziehen in axialer Richtung gesichert ist, **dadurch gekennzeichnet, dass** der Klemmring (5) einen abstehenden Draht aufweist, durch den der Klemmring (5) gegen Verdrehen gesichert und gegenüber einem Gehäuseteil (9) axial beweglich gelagert ist.

2. Küchengerät nach Anspruch 1, **dadurch gekennzeichnet, dass** der Klemmring (5) in einer Sicke (6) der Antriebswelle (1) elastisch gehalten ist.

3. Küchengerät nach Anspruch 1 oder 2, **dadurch gekennzeichnet, dass** der Draht durch zwei Schenkel (7, 8) des Klemmrings (5) gebildet ist, zwischen denen ein Gehäuseteil (9) eingreift.

4. Küchengerät nach Anspruch 3, **dadurch gekennzeichnet, dass** die Schenkel (7, 8) in einem spitzen Winkel, vorzugsweise im Winkel von 30°, voneinander abgebogen sind.

5. Küchengerät nach Anspruch 3 oder 4, **dadurch gekennzeichnet, dass** das Gehäuseteil (9) eine sich im wesentlichen parallel zur Längsachse der Antriebswelle (1) erstreckende Stange (9) ist.

6. Küchengerät nach einem der Ansprüche 1 bis 5, **dadurch gekennzeichnet, dass** die Antriebswelle (1) gegen eine Taste (4) zum Schließen eines elektrischen Schaltkreises des Elektromotors in axialer Richtung verschiebbar ist.

7. Küchengerät nach Anspruch 6, **dadurch gekennzeichnet, dass** die Antriebswelle (1) gegen eine Federkraft einer Druckfeder (2) in axialer Richtung verschiebbar gelagert ist.

8. Küchengerät nach Anspruch 6 oder 7, **dadurch gekennzeichnet, dass** die Druckfeder (2) als Blattfeder ausgebildet ist.

## Claims

1. Motorised kitchen appliance, particularly fruit squeezer (1), with a rotating element, particularly an element which protrudes from a collecting container and is provided for squeezing half of a fruit containing juice and which is driven by way of a drive shaft (1), which is mounted in a housing part and secured by means of a clamping ring (5) against withdrawal in axial direction, **characterised in that** the clamping ring (5) comprises a protruding wire by which the clamping ring (5) is secured against rotation and is mounted to be axially movable relative to a housing part (9).

2. Kitchen appliance according to claim 1, **characterised in that** the clamping ring (5) is resiliently retained in a crease (6) of the drive shaft (1).

3. Kitchen appliance according to claim 1 or 2, **characterised in that** the wire is formed by two limbs (7, 8) of the clamping ring (5), between which a housing part (9) engages.

4. Kitchen appliance according to claim 3, **characterised in that** the limbs (7, 8) are bent away from one another at an acute angle, preferably at an angle of 30°.

5. Kitchen appliance according to claim 3 or 4, **characterised in that** the housing part (9) is a rod (9) extending substantially parallel to the longitudinal axis of the drive shaft (1).

6. Kitchen appliance according to one of claims 1 to 5, **characterised in that** the drive shaft (1) is displaceable in axial direction towards a button (4) for closing an electrical switching circuit of the electric motor.

7. Kitchen appliance according to claim 6, **characterised in that** the drive shaft (1) is mounted to be displaceable in axial direction against a spring force of a pressure spring (2).

8. Kitchen appliance according to claim 6 or 7, **characterised in that** the pressure spring (2) is constructed as a leaf spring.

## Revendications

1. Appareil de cuisine à moteur, en particulier presse-fruits (1), comportant un élément rotatif, en particulier un élément faisant saillie hors d'un récipient collecteur et prévu pour presser une moitié de fruit à jus, lequel élément est entraîné par l'intermédiaire d'un arbre d'entraînement (1) qui est logé dans une partie de boîtier et est protégé au moyen d'une bague de blocage (5) contre son extraction dans le sens axial, **caractérisé en ce que** la bague de blocage (5) comporte un fil, lequel protège la bague de blocage (5) contre une rotation et la loge de manière mobile axialement par rapport à une partie de boîtier (9).

2. Appareil de cuisine selon la revendication 1, **caractérisé en ce que** la bague de blocage (5) est maintenue élastiquement dans une moulure (6) de l'arbre d'entraînement (1).

3. Appareil de cuisine selon la revendication 1 ou 2, **caractérisé en ce que** le fil est constitué par deux bras (7, 8) de la bague de blocage (5) entre lesquels s'engage une partie de boîtier (9).

4. Appareil de cuisine selon la revendication 3, **caractérisé en ce que** les bras (7, 8) sont pliés l'un par rapport à l'autre en formant un angle aigu, de préférence un angle de 30°.

5. Appareil de cuisine selon la revendication 3 ou 4, **caractérisé en ce que** la partie de boîtier (9) est une barre (9) qui s'étend de manière sensiblement parallèle à l'axe longitudinal de l'arbre d'entraînement (1).

6. Appareil de cuisine selon l'une des revendications 1 à 5, **caractérisé en ce que** l'arbre d'entraînement (1) est déplaçable dans le sens axial pour aller à l'encontre d'une touche (4) pour fermer un circuit électrique du moteur électrique.

7. Appareil de cuisine selon la revendication 6, **caractérisé en ce que** l'arbre d'entraînement (1) est logé de manière déplaçable dans le sens axial à l'encontre d'une force élastique d'un ressort de pression (2).

8. Appareil de cuisine selon la revendication 6 ou 7, **caractérisé en ce que** le ressort de pression (2) se présente sous la forme d'un ressort à lames.
